# EUROPÄISCHE PATENTSCHRIFT

(11) **EP 2 721 976 B1**
(45) Veröffentlichungstag und Bekanntmachung des Hinweises auf die Patenterteilung: **17.09.2014**
(21) Anmeldenummer: 12401211.3
(22) Anmeldetag: 18.10.2012
(51) Int. Cl.: A47J 31/44

(54) **Zerlegbarer Zentralauslauf eines Getränkebereiters**
Dismountable central discharge of a beverage preparation machine
Sortie centrale démontable d'un dispositif de préparation de boissons

(43) Veröffentlichungstag der Anmeldung: 23.04.2014
(73) Patentinhaber: Miele & Cie. KG, 33332 Gütersloh (DE)
(72) Erfinder: Jungclaus, Dirk, 59302 Oelde (DE); Wüstefeld, Michael, 59555 Lippstadt (DE); van Pels, Ulrich, 33378 Rheda-Wiedenbrück (DE)

(56) Entgegenhaltungen:
- EP-A1- 2 189 085
- EP-A1- 2 345 354
- EP-A1- 2 596 728
- DE-A1-102010 038 112

## Beschreibung

Die Erfindung betrifft einen zerlegbaren Zentralauslauf nach dem Oberbegriff des Patentanspruches 1 sowie einen Getränkebereiter mit einem derartigen zerlegbaren Zentralauslauf.

Ein Zentralauslauf gemäss Oberbegriff des Anspruchs 1 ist aus DE-A-102010038112 bekannt.

Der Zentralauslauf eines Getränkebereiters kommt zur Abgabe eines Getränkes oder eines Mischgetränkes und/oder von Wasser beziehungsweise Wasserdampf zum Einsatz, wobei der Wasserdampf beispielsweise zum Aufschäumen eines Getränkes oder zur Erzeugung von Schaum, insbesondere von Milchschaum benötigt wird. Er weist daher mehrere, mit einem Strömungsleitungssystem verbundene Fluidanschlussstutzen und eine Ausgabeeinrichtung auf, die strömungsleitend mit den Fluidanschlussstutzen verbunden ist, sodass die Fluidanschlussstutzen letztlich mittelbar oder unmittelbar in die Ausgabeeinrichtung münden.

Aus der EP 2 186 454 A1 ist bereits ein Getränkebereiter in Form eines Kaffeeautomaten bekannt, bei dem der Zentralauslauf derart gestaltet ist, dass wahlweise ein gemeinsames Befüllen von zwei Getränkebehältern oder lediglich eines einzigen Getränkebehälters möglich ist. Die Lösung betrifft daher einen Zentralauslauf mit einer Kanalgabel, deren Teilkanäle je eine Ausgabeleitung bilden und in die je ein Kaffeezuführkanal mündet. Zwar konnte mit diesem Zentralauslauf die Zahl der Bauteile entscheidend verringert werden. Ein Nachteil dieser Lösung besteht jedoch darin, dass im Falle einer erforderlichen Reinigung, Wartung oder Reparatur des Zentralauslaufs ein Auseinandernehmen beziehungsweise Zusammensetzen der zahlreichen Einzelteile erforderlich, jedoch erheblich erschwert ist, da diese Einzelteile des Zentralauslaufs separat aus dem Getränkebereiter entfernt beziehungsweise wieder eingesetzt werden müssen. Auf Grund der platzsparenden Anordnung sämtlicher Bauteile in dem Getränkebereiter ist diese Tätigkeit zudem mühselig und kompliziert. Dieser Umstand ist insbesondere von Bedeutung, weil beispielsweise die Reinigung der Bauteile häufig nicht von einem Fachmann, sondern von Privatpersonen durchgeführt werden muss, die einen derartigen Getränkebereiter besitzen.
Eine ähnliche Lösung mit analogen Nachteilen geht auch aus der EP 2 301 396 A1 hervor.

Die EP 2 189 085 A1 offenbart einen Zentralauslauf, der eine Michkammer mit einem oder mehreren Ausgabeeinrichtungen für das jeweils fertige Getränk und drei Fluidanschlussstutzen umfasst. Der hier offenbarte Zentralauslauf ist nicht zerlegbar ausgeführt, sondern als ein kompaktes Funktionsbauteil, in dem die Einzelteile unlösbar miteinander verschweißt sind.

Die EP 2 345 354 A1 offenbart einen Zentralauslauf für einen Getränkebereiter, der mit seinen Fluidanschlüssen fest im Gerät montiert ist und ein Teil der Auslaufvorrichtung vom Gerät bzw. vom feststehenden Teil mit den Fluidanschlüssen abgenommen werden kann.

Der Erfindung stellt sich somit das Problem, einen zerlegbaren Zentralauslauf sowie einen damit ausgestatteten Getränkebereiter zur Verfügung zu stellen, wobei der Zentralauslauf einfach aufgebaut und ohne Schwierigkeiten montiert beziehungsweise demontiert werden kann, sodass insbesondere seine Reinigung problemlos möglich ist.

Erfindungsgemäß wird dieses Problem durch einen Zentralauslauf eines Getränkebereiters mit den Merkmalen des Patentanspruchs 1 sowie durch einen Getränkebereiter mit den Merkmalen des Patentanspruches 13 gelöst.

Vorteilhafte Ausgestaltungen und Weiterbildungen der Erfindung ergeben sich aus den nachfolgenden Unteransprüchen.

Die Vorteile der Erfindung sind insbesondere in der reduzierten Anzahl der Einzelteile zu sehen, die eine leichtere Handhabung ermöglichen und zu einem vereinfachten Aufbau des Zentralauslaufs führen. Die einfache Handhabung ermöglicht jedoch auch, dass selbst ungeübte Laien in der Lage sind, den Zentralauslauf zu zerlegen beziehungsweise zusammenzusetzen. Die Reinigungsmöglichkeiten des Getränkebereiters verbessern sich somit ebenfalls, da auch hier eine Erleichterung zu verzeichnen ist. Das einstückig ausgeführte Kupplungsstück kann beispielsweise insgesamt aus Kunststoff oder aus einem Kunststoff-Verbundwerkstoff hergestellt und somit auf fertigungstechnisch einfacher Weise erzeugt werden. Damit lassen sich auch die Herstellungskosten des Zentralauslaufs nach der Erfindung und letztlich des damit ausgestatteten Getränkebereiters reduzieren.

Zumindest das Kupplungsstück und die Ausgabeeinrichtung des Zentralauslaufs sind lösbar in einem gemeinsamen Halter aufgenommen. Die Idee, mehrere Einzelteile in einem Halter aufzunehmen, führt zu einer weiteren Erleichterung der Handhabung des erfindungsgemäßen Zentralauslaufs. Mit einfachen Worten ausgedrückt kann der Halter insgesamt aus dem Getränkebereiter entnommen oder wieder in diesen eingesetzt werden. Filigrane Montagetätigkeiten entfallen dadurch, was auch dazu führt, dass ein Verletzungsrisiko insgesamt vermindert werden kann. Nach der Entnahme des Halters kann somit der Zentralauslauf in seine Einzelteile zerlegt und beispielsweise in einer Geschirrspülmaschine gereinigt werden.

Um die Reinigung der Einzelteile zu ermöglichen, wird darüber hinaus vorgesehen, das Kupplungsstück lösbar in eine korrespondierende Aufnahme des Halters oder des Getränkebereiters einzusetzen. Hierbei muss zwischen der lösbaren Verbindung des Kupplungsstückes mit dem Halter beziehungsweise der lösbaren Verbindung des Kupplungsstückes mit dem Getränkebereiter unterschieden werden. Wird nämlich kein Halter als Bestandteil des zerlegbaren Zentralauslaufs vorgesehen, so besteht auch die Möglichkeit, das Kupplungsstück unmittelbar in den Getränkebereiter einzusetzen. Durch diese Maßnahme kann zwar der Halter eingespart werden, jedoch erfordert das Einsetzen beziehungsweise Entnehmen des Kupplungsstückes etwas mehr Geschick.

Die Fixierung des Kupplungsstücks ist von entscheidender Bedeutung, da das Kupplungsstück erfindungsgemäß mit mindestens zwei Fluidanschlussstutzen ausgestattet ist, die ihrerseits an Strömungsleitungen des Getränkebereiters angeschlossen werden. Um hier eine zuverlässige und dichtende Verbindung bereitzustellen, muss die genannte Fixierung des Kupplungsstück erfolgen. Aus diesem Grund wird vorgeschlagen, dass das Kupplungsstück über einen Kraft- oder Formschluss in die Aufnahme eingesetzt oder durch eine Magnethalterung lösbar in der Aufnahme fixiert ist. Je nach Platzverhältnissen und gewünschtem baulichen beziehungsweise konstruktiven Aufwand kann aus den genannten Fixierungsmöglichkeiten eine optimale Variante gewählt werden.

Die erfindungsgemässe Fixierung des Kupplungsstück ist darin zu sehen, dass die Aufnahme für zumindest zwei an dem Kupplungsstück vorhandene Anschlusszapfen je einen korrespondierenden Flansch aufweist, wobei jeder dieser Anschlusszapfen unter Bildung einer Schnapp- oder Klemmverbindung nur in je einen der Flansche passender Größe einsetzbar ist. Mit anderen Worten werden die Anschlusszapfen unterschiedlich ausgelegt, so dass immer nur ein hierfür vorgesehener Anschlusszapfen in exakt einen passenden Flansch eingesetzt werden kann. Diese Ausbildung gewährleistet, dass das Kupplungsstück jederzeit in der korrekten, vorgesehenen Einbauposition eingesetzt wird. Eine Fehlmontage kann somit wirksam verhindert werden. Hieraus ergibt sich folglich eine starke Vereinfachung und damit Verbesserung des gesamten zerlegbaren Zentralauslaufs nach der Erfindung.

Eine spezielle Ausführungsvariante dieses Vorschlages ist darin zu sehen, dass die Anschlusszapfen unterschiedliche Außenmaße und/oder unterschiedliche Außengeometrien aufweisen. Auch mit dieser Lösung kann gewährleistet werden, dass das Kupplungsstück immer nur in einer bestimmten, vorgesehenen Einbaulage eingesetzt werden kann.

Eine weitere Lösung besteht darüber hinaus darin, dass an dem Kupplungsstück in einer Reihe ein Fluidanschlussstutzen zwischen zwei Anschlusszapfen angeordnet ist und die Aufnahme zwei mit ihrer Aufnahmeöffnung in zueinander entgegen gesetzten Richtungen ausgerichtete Flansche aufweist, sodass das mit der Ausgabeeinrichtung verbundene Kupplungsstück durch eine 90°-Drehung um den Fluidanschlussstutzen nur in den zu den Außenabmessungen der Anschlusszapfen passenden Flanschen fixiert werden kann. Bei dieser speziellen Variante wird folglich zunächst über den Fluidanschlussstutzen eine strömungsleitende Verbindung hergestellt, wozu der Fluidanschlussstutzen in eine korrespondierende Öffnung eingesteckt werden kann, in der anschließend das gesamte Kupplungsstück um 90° gedreht wird, so dass die Verbindung zwischen den Flanschen und den Anschlusszapfen hergestellt werden kann. Auf diese Weise wird eine Art Schnelllösemechanismus gebildet. Durch die zueinander entgegengesetzte Ausrichtung der Flansche kann zudem die korrekte Einbaulage gewährleistet werden, denn ein seitenverkehrtes Einsetzen des Kupplungsstückes ist damit nicht möglich.

Neben den bereits genannten Maßnahmen, eine korrekte Montage des Kupplungsstückes zu gewährleisten, geht ein weiterführenderer Vorschlag der Erfindung dahin, die Anschlusszapfen mit verschiedenen Abständen zu dem zwischen ihnen angeordneten Fluidanschlussstutzen auszustatten. Folgerichtig ist das Kupplungsstück in einem solchen Fall zumindest im Bereich der Anschlussgeometrie nicht symmetrisch aufgebaut.

Um das Kupplungsstück nur in einer bestimmten, hierfür vorgesehenen Einbaulage einsetzen zu können, ist folglich die Aufnahme stets so ausgeführt, dass für jeden der vorhandenen Anschlusszapfen nur ein passender Flansch vorhanden ist. Dies bedeutet, dass für jeden vorhandenen Anschlusszapfen exakt nur ein bestimmter Flansch vorhanden ist, unabhängig davon, ob Sie unterschiedliche Querschnitte, verschiedene Anschlussgeometrien oder Abstände zueinander aufweisen.

Neben dem Umstand, dass die Ausgabeeinrichtung eine einfache Strömungsleitung sein kann, die beispielsweise in eine Ausgabedüse mündet, geht ein weiterführender Vorschlag nach der Erfindung dahin, dass die Ausgabeeinrichtung eine Fluidweiche aufweist, deren Ausgabeleitungen mit je einer Ausgabedüse ausgestattet sind. Mit anderen Worten verzweigt sich die Ausgabeeinrichtung in mehrere Ausgabeleitungen. Eine besonders einfache Lösung besteht darin, dass die Fluidweiche eine Y-Form aufweist und sich somit in zwei Ausgabeleitungen unterteilt. Dadurch kann beispielsweise erreicht werden, dass ein über die Ausgabeeinrichtung abgegebenes Getränk gleichzeitig in mehrere unter der Ausgabedüse abgestellte Gefäße gefüllt werden kann.

Da die Erfindung auf insgesamt einen zerlegbaren Zentralauslauf abzielt, ist es von besonderem Vorteil, wenn auch die Fluidweiche beispielsweise zu Reinigungszwecken auf einfache Weise aus den Zentralauslauf entnommen werden kann. Hierfür ist es besonders hilfreich, wenn die Fluidweiche aus einem flexiblen Werkstoff hergestellt ist. Als flexibler Werkstoff kann beispielsweise ein Gummiwerkstoff zum Einsatz kommen, der geeignet ist in einem mit dem zerlegbaren Zentralauslauf ausgestatteten Getränkebereiter verwendet zu werden. Hierbei ist zum Beispiel zu berücksichtigen, dass in einem Getränkebereiter thermische und/oder chemische Belastungen auf den Werkstoff einwirken. Dem Fachmann steht hierfür jedoch eine ausreichende Auswahl unterschiedlicher, flexibler Materialien zur Verfügung.

Zur Erleichterung des Ein- und Ausbaus der Fluidweiche ist es darüber hinaus sinnvoll, wenn diese an wenigstens einer ihrer Ausgabeleitungen einen Griffbügel aufweist. Somit kann die Fluidweiche an diesem Griffbügel erfasst und aus den Zentralauslauf entnommen beziehungsweise beim Einsetzen der Fluidweiche mit Hilfe des Griffbügels in den Zentralauslauf eingesetzt werden. Als Griffbügel sind dabei zum Beispiel einfache stegartige Ausformungen des Werkstoffes der Fluidweiche verwendbar, die gemäß einem weiterführenden Gedanken unmittelbar bei der Herstellung der Fluidweiche an dieser angeformt werden können.

Hinsichtlich des Halters besteht eine weitere Ausgestaltung der Erfindung darin, dass der Halter an seiner Unterseite ein Verteilerelement aufweist. Dieses Verteilerelement dient dazu, ein über die Ausgabeeinrichtung zugeführtes Getränk oder Getränkegemisch auf die Ausgabedüsen zu verteilen. Hierzu kann das Verteilerelement intern Strömungskanäle aufweisen. Von besonderem Vorteil ist es, wenn das Verteilerelement lösbar an den Zentralauslauf befestigt ist und beispielsweise auch aus einem elastischen Werkstoff, wie Gummi, hergestellt wird. Die Elastizität des Verteilerelementes erleichtert seine Montage beziehungsweise Demontage. Von Bedeutung ist jedoch, dass hier ein Werkstoff ausgewählt wird, der geeignet ist, in einem Geschirrspülerautomaten gereinigt zu werden. Somit vereinfacht sich die Handhabung des Zentralauslaufs insgesamt in erheblichem Maße und die Reinigungsmöglichkeit wird zudem verbessert.

Wie eingangs bereits ausgeführt wurde, werden Getränkebereiter auch von Laien bedient. Insofern ist es von Bedeutung, dass die Zerlegung und Montage des Zentralauslaufs möglichst einfach erfolgen kann. Dadurch werden Fehlfunktionen des Getränkebereiters und mögliche Schäden an den Bauteilen oder am Getränkebereiter vermieden. Da auch die Ausgabeeinrichtung aus dem Zentralauslauf entnommen werden kann, ist es von Vorteil, wenn der Halter mindestens ein Sichtfenster aufweist. Durch das Sichtfenster besteht die Möglichkeit, eine Sichtprüfung des korrekten Sitzes der Ausgabeeinrichtung vorzunehmen. Handelt es sich bei der Ausgabeeinrichtung beispielsweise um eine Fluidweiche, so müssen die Ausgabeleitungen dieser Fluidweiche korrekt auf die jeweilige Ausgabedüse aufgesetzt werden. Dabei kann ein oder können mehrere Sichtfenster im Bereich des Anschlusses zwischen der entsprechenden Ausgabeleitung und der korrespondierenden Ausgabedüse eine entscheidende Hilfe sowohl für die genannte Sichtkontrolle als auch für die Montage selbst sein.

Zur Erleichterung der Handhabung des Halters geht eine Weiterbildung der Erfindung dahin, dass der Halter über mindestens einen Griffbereich verfügt. Auf diese Weise kann der Halter an diesem Griffbereich erfasst und der gesamte Zentralauslauf aus dem Getränkebereiter entnommen beziehungsweise in diesen eingesetzt werden.

Ein Getränkebereiter nach der Erfindung weist einen zerlegbaren Zentralauslauf als Bestandteil des Getränkebereiters auf, wobei der Zentralauslauf über einen Wasser beziehungsweise Wasserdampf führenden Fluidanschlussstutzen, einen Kaffee oder Kakao führenden Fluidanschlussstutzen und einen Milch führenden Fluidanschlussstutzen verfügt. Eine spezielle Ausführungsvariante eines mit einem erfindungsgemäßen Zentralauslauf ausgestatteten Getränkebereiters besteht folglich in einem für Kaffeegetränke oder Kakaogetränke beziehungsweise deren Gemische geeigneten Getränkebereiter.

Ein Ausführungsbeispiel der Erfindung wird nachfolgend anhand der beigefügten Zeichnungen näher erläutert. Das gezeigte Ausführungsbeispiel stellt keine Einschränkung auf die dargestellte Variante dar, sondern dient lediglich der Erläuterung eines Prinzips der Erfindung. Dabei sind gleiche oder gleichartige Bauteile mit denselben Bezugsziffern bezeichnet. Um die erfindungsgemäße Funktionsweise veranschaulichen zu können, sind in den Figuren nur stark vereinfachte Prinzipdarstellungen gezeigt, bei denen auf die für die Erfindung nicht wesentlichen Bauteile verzichtet wurde. Dies bedeutet jedoch nicht, dass derartige Bauteile bei einer erfindungsgemäßen Lösung nicht vorhanden sind.

Es zeigt:
- Figur 1:: eine Explosivdarstellung eines zerlegbaren Zentralauslaufs vom Geräteinneren her gesehen;
- Figur 2:: den Teilzusammenbau des in Figur 1 gezeigten Zentralauslaufs
- Figur 3:: einen Zentralauslauf mit einer oberen Abdeckung,
- Figur 4:: einen Zentralauslauf mit einer oberen und einer unteren Abdeckung
und
- Figur 5:: einen Getränkebereiter mit einem zerlegbaren Zentralauslauf.

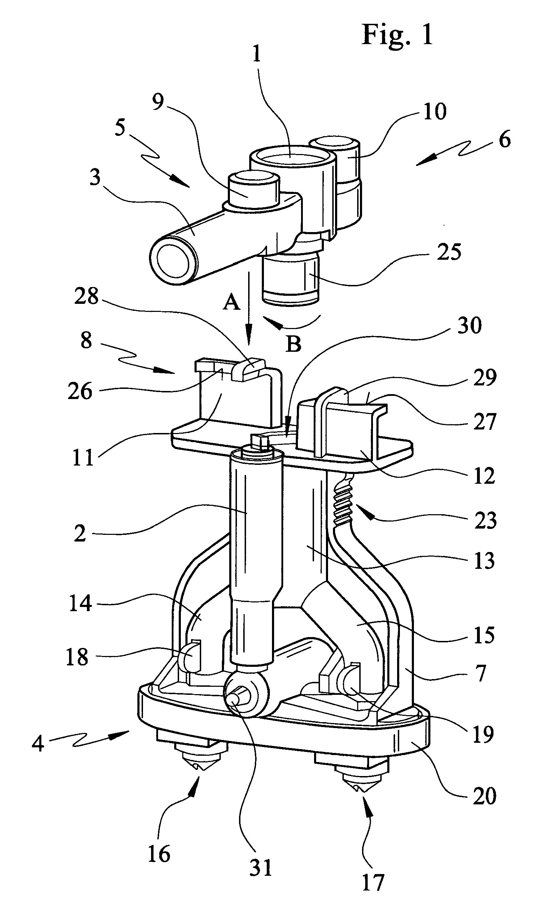

Die Figuren 1-5 zeigen in vereinfachter Form eine mögliche Reihenfolge beim Zusammenbau eines teilweise zerlegten Zentralauslaufs 6 eines Getränkebereiters, bei dem es sich vorliegend um einen Kaffeeautomaten handelt.

Der Zentralauslauf 6 in Figur 1 weist als wesentliches, erfindungsgemäßes Element zunächst ein Kupplungsstück 5 auf, das hierbei als einteiliges Kunsstoff-Formteil hergestellt ist. Das Kupplungsstück 5 verfügt über zwei Fluidanschlussstutzen 1 und 3, wobei der Fluidanschlussstutzen 1 für Wasser beziehungsweise Wasserdampf und der Fluidanschlussstutzen 3 für Milch verwendet wird. Der Fluidanschlussstutzen 1 ist in einer geradlinigen Reihe mit zwei Anschlusszapfen 9 und 10 an der Oberseite des Kupplungsstückes 5 angeordnet. Auf der dem Fluidanschlussstutzen 1 gegenüberliegenden Unterseite des Kupplungsstückes 5 verfügt das Kupplungsstück 5 über einen Dichtflansch 25, der in eine korrespondierende Öffnung 30 eingeführt werden kann, so dass er innerhalb der Öffnung 30 drehbar und dennoch dichtend aufgenommen ist. Die Öffnung 30 befindet sich zwischen zwei Flanschen 11 und 12, die durch ein plattenartiges Element miteinander verbunden sind und somit eine Aufnahme 8 als einteiliges Formteil darstellen. Die Öffnung 30 bildet strömungstechnisch einen Übergang in eine Fluidweiche 13, die sich im unteren Teil des Zentralauslaufs 6 in zwei Ausgabeleitungen 14 und 15 unterteilt und somit annähernd eine Y-Form aufweist. Die Flansche 11, 12 und folglich die Aufnahme 8 sind hier einstückige Bestandteile eines Halters 7, der dazu dient, den gesamten Zentralauslauf 6 mit seinen einzelnen Bauelementen als eine Einheit zusammenzufassen, so dass zur Demontage des Zentralauslaufs lediglich der Halter 7 aus dem Getränkebereiter entnommen werden muss. Zur Vereinfachung der Montage beziehungsweise Demontage des gesamten Zentralauslauf 6 mit dem Halter 7 verfügt der Halter 7 über Griffbereiche 23, 24, von denen in der Figur 1 lediglich der Griffbereich 23 dargestellt ist. Durch den Pfeil "A" ist in der Figur 1 ein erster Montageschritt zur Verbindung des Kupplungsstückes 5 mit dem Halter 7 veranschaulicht, der in dem Einsetzen des Kupplungsstückes 5 in die Öffnung 30 des Halters 7 besteht.

Im Anschluss daran wird das Kupplungsstück 5 um etwa 90° in Uhrzeigerrichtung gedreht, was durch den Pfeil "B" verdeutlicht ist. Dies hat zur Folge, dass die Anschlusszapfen 9, 10 in die jeweils korrespondierenden Flansche 11, 12 einrücken können und somit das Kupplungsstück 5 als Bestandteil des Zentralauslaufs 6 mit dem Halter 7 verbinden. Die Besonderheit besteht hierbei darin, dass der Anschlussstutzen 9 einen anderen Durchmesser aufweist, als der Anschlussstutzen 10. Folglich kann der Anschlussstutzen 9 ausschließlich in den Flansch 11 und der Anschlussstutzen 10 nur in den Flansch 12 eingesetzt werden. Eine umgekehrte Einbaurichtung wird durch diese Maßnahme wirksam verhindert, so dass Einbaufehler und deren möglicherweise schwerwiegende Folgen auf diese Weise verhindert werden können. Die Verbindung zwischen den Anschlussstutzen 9, 10 und den korrespondierenden Flanschen 11, 12 besteht hierbei in einer Schnappverbindung, die durch einen Steg 28 sowie eine zu dem Anschlussstutzen 9 passende Aufnahmekontur 26 am Flansch 11 und einen Steg 29 sowie eine zu dem Anschlussstutzen 10 passende Aufnahmekontur 27 am Flansch 12 gewährleistet wird. Die Stege 28 und 29 sind folglich begrenzt elastisch verformbar und liegen an den in die Aufnahme 8 eingesetzten Anschlussstutzen 9, 10 unter einer Vorspannung an. Die Flansche 11, 12 und letztlich auch die Öffnung 30 bilden folglich insgesamt die Aufnahme 8 für das einzusetzende Kupplungsstück 5.

Die Fluidweiche 13, die in ihrem unteren Bereich in die Ausgabeleitungen 14 und 15 übergeht, verfügt in diesem Abschnitt der Ausgabeleitungen 14, 15 über je einen Griffbügel 18, 19 an jedem der Ausgabeleitungen 14, 15. Diese Griffbügel 18, 19 dienen der Erleichterung des Erfassens der Fluidweiche 13, wenn diese aus dem Zentralauslauf 6 entfernt oder wieder mit dem Zentralauslauf 6 verbunden werden soll. Die Ausgabeleitungen 14 und 15 bilden ferner einen Übergang in je eine Ausgabedüse 16 beziehungsweise 17, über die hierbei ein Kaffeegetränk ausgegeben werden kann. Dieses Kaffeegetränk wird über den Fluidanschlussstutzen 2 zugeführt und innerhalb eines Verteilerelementes 20 an der Unterseite des Zentralauslaufs 6 auf die Ausgabedüsen 16 und 17 verteilt. Hierzu verfügt der Innenraum des Verteilerelementes 20 über ein in der Figur 1 nicht gezeigtes Strömungsleitungssystem. Das Verteilerelement 20 ist aus einem flexiblen Werkstoff hergestellt, so dass es ebenfalls von dem Zentralauslauf 6 entfernt und ohne große Mühe an diesem befestigt werden kann. Das Verteilerelement 20 ist ebenso, wie sämtliche der am Zentralauslauf 6 vorhandenen Bauelemente, geeignet, in einem Geschirrspülerautomaten gereinigt zu werden. Die Ausgabeleitungen 14, 15 sowie die korrespondierenden Ausgabedüsen 16, 17 bilden zusammen mit dem Verteilerelement 20 insgesamt eine Ausgabeeinrichtung 4 des Zentralauslaufs 6. Um zu gewährleisten, dass der gesamte Zentralauslauf 6 auch korrekt in den Getränkebereiter eingesetzt werden kann, ist ferner im unteren Bereich des Zentralauslaufs 6 ein Justiernocken 31 vorhanden, der bei dem in Figur 1 gezeigten Beispiel ein mechanischer Nocken ist, welcher beim Einsetzen des Zentralauslaufs 6 in den Getränkebereiter in eine korrespondierende Aufnahme eingefügt wird. Eine andere Möglichkeit besteht natürlich darin, diesen Justiernocken 31 durch eine Magnetverbindung zu ersetzen.

Die wesentlichen Elemente des zerlegbaren Zentralauslaufs 6 sind demnach in dem Kupplungsstück 5, der Aufnahme 8 für das Kupplungsstück 5 und der Ausgabeeinrichtung 4 zu sehen, wobei ferner ein Halter 7 für die erfindungsgemäßen Zwecke dienlich ist.

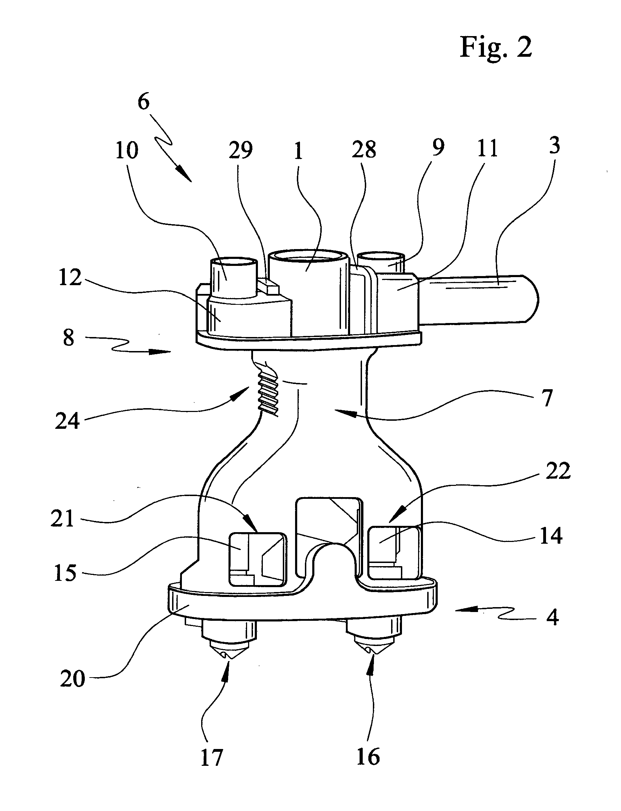

Aus der Figur 2 geht der im Zusammenhang mit der Figur 1 bereits beschriebene Zentralauslauf 6 noch einmal als Teilzusammenbau in einer vorderseitigen Ansicht hervor. Hierbei wurde das Kupplungsstück 5 in die Aufnahme 8 eingesetzt, so dass die Anschlussstutzen 9, 10 in die hierzu passenden Flansche 11, 12 eingefügt sind. Dabei dienen in der zuvor bereits beschriebenen Weise die Stege 28, 29 sowie die Aufnahmekonturen 26, 27 dazu, eine elastische Schnappverbindung zwischen Kupplungsstück 5 und Aufnahme 8 herzustellen. Der Anschlussstutzen 9 und der Anschlussstutzen 10 weisen unterschiedliche Geometrien auf, so dass der Anschlussstutzen 9 ausschließlich in den hierzu passend gestalteten Flansch 11 und der Anschlussstutzen 10 nur in den korrespondierenden Flansch 12 eingesetzt werden kann. Die Aufnahme 8 bildet einen einteiligen Bestandteil des Halters 7, an dessen Unterseite, im Bereich der Ausgabeeinrichtung 4, das Verteilerelement 20 mit den daran vorhandenen Ausgabedüsen 16, 17 befestigt ist.

Die Besonderheit der Ausführung in Figur 2 besteht darin, dass der Halter 7 im Bereich der Ausgabeeinrichtung 4 zwei Sichtfenster 21 und 22 aufweist, die dazu geeignet sind, eine Sichtkontrolle der korrekten Befestigung der Ausgabeleitungen 14, 15 der sich in diesem Bereich verzweigenden Fluidweiche 13 zu ermöglichen. Diese Maßnahme trägt somit dazu bei, die Gerätesicherheit eines mit dem Zentralauslauf ausgestatteten Getränkebereiters insgesamt zu erhöhen.

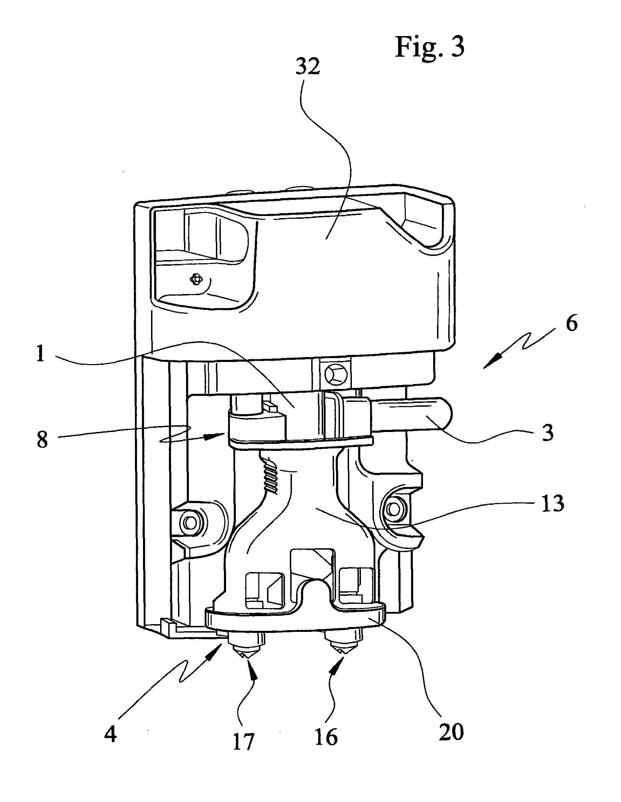

Ein weiterer Montageschritt in Richtung eines vollständigen Einbaus des zerlegbaren Zentralauslaufs 6 in einen Getränkebereiter wird in der Figur 3 gezeigt. Hierbei wurde der zusammengesetzte Zentralauslauf 6 bereits über eine Steckverbindung in einen Teil des nur andeutungsweise gezeigten Getränkebereiters eingesetzt. Der dargestellte Teil des Getränkebereiters bildet eine Ausgabeeinheit, die in einem Kaffeeautomaten der hier beschriebenen Art zusätzlich in der Höhe verstellbar ausgeführt ist. Oberhalb des Zentralauslaufs 6 wurde die Ausgabeeinheit in Figur 3 mit einer oberen Abdeckung 32 versehen.

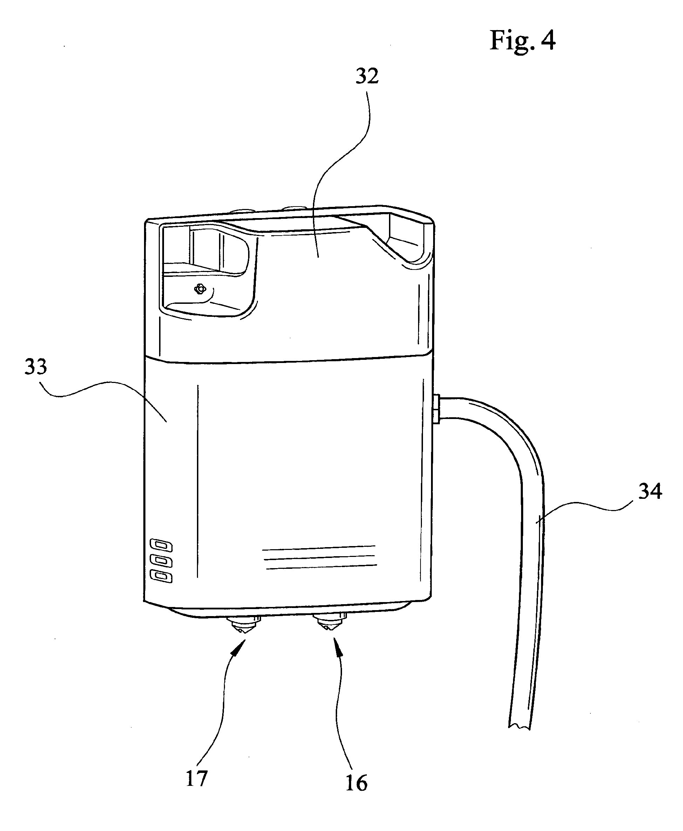

Die Figur 4 zeigt einen darauf folgenden Status des Einbaus des Zentralauslaufs 6 in den Getränkebereiter. Hieraus wird erkennbar, dass an dem Fluidanschlussstutzen 3 ein Milchschlauch 34 angesetzt wurde und der gesamte Zentralauslauf 6 zusätzlich durch eine untere Abdeckung 33 verdeckt ist. Unterhalb der somit gebildeten Ausgabeeinheit sind die Ausgabedüsen 16,17 erkennbar.

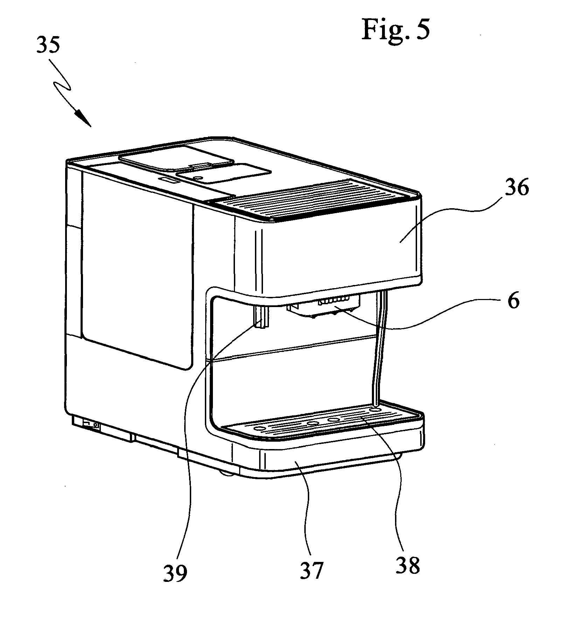

Schließlich ist in der Figur 5 ein Getränkebereiter 35 in Form eines Kaffeeautomaten als separates, also nicht in einen Küchenschrank eingebautes Standgerät dargestellt. Dieser Getränkebereiter 35 verfügt über einen oberen Vorbau 36 und einen darunter angeordneten, unteren Vorbau 37. Zwischen dem oberen Vorbau 36 und dem unteren Vorbau 37 ist somit eine Nische ausgebildet, die dazu nutzbar ist, ein oder mehrere mit einem Getränk zu befüllende Gefäße auf einem Abtropfblech 38 abzustellen, dessen Öffnungen in Form von Schlitzen oder Bohrungen verspritzende oder nachtropfende Flüssigkeitsreste nach unten, in eine unterhalb des Abtropfbleches 38 vorhandene Abtropfschale abführen. Ein oder mehrere, auf dem Abtropfblech 38 abgestellte Gefäße können mit Hilfe der Ausgabeeinheit mit einem Getränk befüllt werden. Wie bereits ausgeführt wurde, ist die Ausgabeeinheit insgesamt in der Höhe verstellbar, so dass sie dem Tassenrand angenähert werden kann, was ein unerwünschtes Verspritzen des Getränkes vermeidet. Innerhalb der Ausgabeeinheit befindet sich der zerlegbare Zentralauslauf 6, von dem in der Figur 5 lediglich andeutungsweise die Ausgabedüsen 16 und 17 erkennbar sind. Ergänzend ist seitlich neben dem in der Ausgabeeinheit verdeckten Zentralauslauf 6 eine Heißwasserdüse 39 zur Abgabe von heißem Wasser oder Wasserdampf angeordnet, wobei das heiße Wasser beispielsweise für ein Aufgussgetränk und der Wasserdampf beispielsweise zur Herstellung eines Schaumgetränkes verwendet werden kann.

### BEZUGSZEICHENLISTE:

- 1: Fluidanschlussstutzen (Wasser/Dampf)
- 2: Fluidanschlussstutzen (Kaffee)
- 3: Fluidanschlussstutzen (Milch)
- 4: Ausgabeeinrichtung
- 5: Kupplungsstück
- 6: Zentralauslauf
- 7: Halter
- 8: Aufnahme
- 9: Anschlusszapfen
- 10: Anschlusszapfen
- 11: Flansch
- 12: Flansch
- 13: Fluidweiche
- 14: Ausgabeleitung
- 15: Ausgabeleitung
- 16: Ausgabedüse
- 17: Ausgabedüse
- 18: Griffbügel
- 19: Griffbügel
- 20: Verteilerelement
- 21: Sichtfenster
- 22: Sichtfenster
- 23: Griffbereich
- 24: Griffbereich
- 25: Dichtflansch
- 26: Aufnahmekontur
- 27: Aufnahmekontur
- 28: Steg
- 29: Steg
- 30: Öffnung
- 31: Justiernocken
- 32: Obere Abdeckung
- 33: Untere Abdeckung
- 34: Milchschlauch
- 35: Getränkebereiter (Kaffeeautomat)
- 36: oberer Vorbau
- 37: unterer Vorbau
- 38: Abtropfblech
- 39: Heißwasserdüse

## Patentansprüche

1. Zerlegbarer Zentralauslauf eines Getränkebereiters, mit verschiedenen Fluidanschlussstutzen (1, 2, 3), die in mindestens eine, zur Ausgabe eines Getränkes oder eines Getränkegemisches geeignete Ausgabeeinrichtung (4) münden,
wobei der Zentralauslauf (6) ein einteiliges Kupplungsstück (5) mit mindestens zwei Fluidanschlussstutzen (1, 3) aufweist, wobei
zumindest das Kupplungsstück (5) und die Ausgabeeinrichtung (4) des Zentralauslaufs (6) lösbar in einem gemeinsamen Halter (7) aufgenommen sind und
das Kupplungsstück (5) lösbar in eine korrespondierende Aufnahme (8) des Halters (7) oder des Getränkebereiters eingesetzt ist,
**dadurch gekennzeichnet, dass**
die Aufnahme (8) für zumindest zwei an dem Kupplungsstück (5) vorhandene Anschlusszapfen (9, 10) je einen korrespondierenden Flansch (11, 12) aufweist, wobei jeder dieser Anschlusszapfen (9, 10) unter Bildung einer Schnapp- oder Klemmverbindung nur in je einen der Flansche (11, 12) passender Größe einsetzbar ist.

2. Zerlegbarer Zentralauslauf nach Anspruch 1,
**dadurch gekennzeichnet, dass**
das Kupplungsstück (5) über einen Kraft- oder Formschluss in die Aufnahme (8) eingesetzt oder durch eine Magnethalterung lösbar in der Aufnahme (8) fixiert ist.

3. Zerlegbarer Zentralauslauf nach Anspruch 1 oder 2,
**dadurch gekennzeichnet, dass**
die Anschlusszapfen (9, 10) unterschiedliche Außenmaße und/oder unterschiedliche Außengeometrien aufweisen.

4. Zerlegbarer Zentralauslauf nach einem der Ansprüche 1 bis 3,
**dadurch gekennzeichnet, dass**
an dem Kupplungsstück (5) ein Fluidanschlussstutzen (1) zwischen zwei Anschlusszapfen (9, 10) in einer Reihe angeordnet ist und die Aufnahme (8) zwei mit ihrer Aufnahmeöffnung in zueinander entgegen gesetzten Richtungen ausgerichtete Flansche (11, 12) aufweist, sodass das mit der Ausgabeeinrichtung (4) verbundene Kupplungsstück (5) durch eine zumindest etwa 90°-Drehung um den Fluidanschlussstutzen (1) in den zu den Außenabmessungen der Anschlusszapfen (9, 10) passenden Flanschen (11, 12) fixiert aufgenommen ist.

5. Zerlegbarer Zentralauslauf nach Anspruch 4,
**dadurch gekennzeichnet, dass**
die Anschlusszapfen (9, 10) verschiedene Abstände zu dem zwischen ihnen angeordneten Fluidanschlussstutzen (1) aufweisen.

6. Zerlegbarer Zentralauslauf nach einem der Ansprüche 1 bis 5,
**dadurch gekennzeichnet, dass**
die Aufnahme (8) für jeden der vorhandenen Anschlusszapfen (9, 10) einen passenden Flansch (11, 12) aufweist.

7. Zerlegbarer Zentralauslauf nach einem der vorstehend genannten Ansprüche,
**dadurch gekennzeichnet, dass**
die Ausgabeeinrichtung (4) eine Fluidweiche (13) aufweist, deren Ausgabeleitungen (14, 15) mit je einer Ausgabedüse (16, 17) ausgestattet sind.

8. Zerlegbarer Zentralauslauf nach Anspruch 7,
**dadurch gekennzeichnet, dass**
die Fluidweiche (13) aus einem flexiblen Werkstoff hergestellt ist.

9. Zerlegbarer Zentralauslauf nach Anspruch 7 oder 8,
**dadurch gekennzeichnet, dass**
die Fluidweiche (13) an wenigstens einer ihrer Ausgabeleitungen (14, 15) einen Griffbügel (18, 19) aufweist.

10. Zerlegbarer Zentralauslauf nach einem der Ansprüche 1 bis 9,
**dadurch gekennzeichnet, dass**
der Halter (7) an seiner Unterseite ein Verteilerelement (20) aufweist.

11. Zerlegbarer Zentralauslauf nach einem der Ansprüche 1 bis 10,
**dadurch gekennzeichnet, dass**
der Halter (7) mindestens ein Sichtfenster (21, 22) aufweist.

12. Zerlegbarer Zentralauslauf nach einem der Ansprüche 1 bis 11,
**dadurch gekennzeichnet, dass**
der Halter (7) mindestens einen Griffbereich (23, 24) aufweist.

13. Getränkebereiter mit einem zerlegbaren Zentralauslauf nach einem der vorstehend genannten Ansprüche,
**dadurch gekennzeichnet, dass**
der Zentralauslauf ein Bestandteil des Getränkebereiters (35) ist und einen Wasser beziehungsweise Wasserdampf führenden Fluidanschlussstutzen (1), einen Kaffee oder Kakao führenden Fluidanschlussstutzen (2) und einen Milch führenden Fluidanschlussstutzen (3) aufweist.

## Claims

1. Dismountable central discharge of a beverage preparation machine, having various fluid connection pipes (1, 2, 3) discharging into at least one dispensing device (4) suitable for dispensing a beverage or a beverage mixture,
the central discharge (6) comprising a coupling part (5) formed in one piece and having at least two fluid connection pipes (1, 3),
at least the coupling part (5) and the dispensing device (4) of the central discharge (6) being releasably received in a common holder (7) and the coupling part (5) being releasably inserted in a corresponding retainer (8) of the holder (7) or of the beverage preparation machine,
**characterised in that**
the retainers (8) for at least two connection pieces (9, 10) provided on the coupling part (5) each comprise a corresponding flange (11, 12), each of said connection pieces (9, 10) being able to be inserted into only one of the flanges (11, 12) of the correct size in each case, forming a snap connection or a clamping connection.

2. Dismountable central discharge according to claim 1,
**characterised in that**
the coupling part (5) is inserted in the retainer (8) by means of a non-positive or positive fit, or is releasably fixed in the retainer (8) by means of a magnetic support.

3. Dismountable central discharge according to either claim 1 or claim 2, **characterised in that**
the connection pieces (9, 10) have different outer dimensions and/or different outer geometries.

4. Dismountable central discharge according to any of claims 1 to 3,
**characterised in that**
a fluid connection pipe (1) is arranged on the coupling part (5) linearly between two connection pieces (9, 10) and the retainer (8) comprises two flanges (11, 12) having their retainer openings oriented in opposite directions, so that the coupling part (5) connected to the dispensing device (4) is fixedly received in the flanges (11, 12) corresponding to the outer dimensions of the connection pieces (9, 10) by means of a rotation about the fluid collection pipe (1) by at least approximately 90°.

5. Dismountable central discharge according to claim 4,
**characterised in that**
the connection pieces (9, 10) are at different distances from the fluid connection pipes (1) arranged therebetween.

6. Dismountable central discharge according to any of claims 1 to 5,
**characterised in that**
the retainer (8) comprises a suitable flange (11, 12) for each of the connection pieces (9, 10) present.

7. Dismountable central discharge according to any of the preceding claims, **characterised in that**
the dispensing device (4) comprises a fluid switch (13), the discharge pipes (14, 15) of which are each equipped with a discharge nozzle (16, 17).

8. Dismountable central discharge according to claim 7,
**characterised in that**
the fluid switch (13) is made from a flexible material.

9. Dismountable central discharge according to either claim 7 or claim 8, **characterised in that**
the fluid switch (13) comprises a grip (18, 19) on at least one of its discharge pipes (14, 15).

10. Dismountable central discharge according to any of claims 1 to 9,
**characterised in that**
the holder (7) comprises a distribution element (20) on its underside.

11. Dismountable central discharge according to any of claims 1 to 10,
**characterised in that**
the holder (7) comprises at least one inspection window (21, 22).

12. Dismountable central discharge according to any of claims 1 to 11,
**characterised in that**
the holder (7) comprises at least one gripping region (23, 24).

13. Beverage preparation machine comprising a dismountable central discharge according to any of the preceding claims,
**characterised in that**
the central discharge is a component of the beverage preparation machine (35) and comprises a fluid connection pipe for conducting water or steam, a fluid connection pipe (2) for conducting coffee or cocoa and a fluid connection pipe (3) for conducting milk.

## Revendications

1. Sortie centrale démontable d'un préparateur de boissons, avec différentes tubulures de raccordement de fluide (1, 2, 3) qui débouchent dans au moins un dispositif de distribution (4) approprié pour la distribution d'une boisson ou d'un mélange de boissons, la sortie centrale (6) présentant une pièce d'accouplement (5) en une seule partie avec au moins deux tubulures de raccordement de fluide (1, 3),
au moins la pièce d'accouplement (5) et le dispositif de distribution (4) de la sortie centrale (6) étant logés de façon amovible dans un élément de retenue (7) commun, et la pièce d'accouplement (5) étant introduite de façon amovible dans un logement (8) correspondant de l'élément de retenue (7) ou du préparateur de boissons,
**caractérisée en ce que**
le logement (8) destiné au moins à deux raccords (9, 10) présents sur la pièce d'accouplement (5) présente respectivement une bride (11, 12) correspondante, chacun de ces raccords (9, 10) ne pouvant, avec formation d'un raccordement par encliquetage ou serrage, être introduit que dans respectivement une des brides (11, 12) de dimension adaptée.

2. Sortie centrale démontable selon la revendication 1,
**caractérisée en ce que**
la pièce d'accouplement (5) est introduite dans le logement (8) par le biais d'une liaison de force ou de forme, ou est fixée de façon amovible dans le logement (8) par une retenue magnétique.

3. Sortie centrale démontable selon la revendication 1 ou 2,
**caractérisée en ce que**
les raccords (9, 10) présentent des dimensions extérieures différentes et/ou des géométries extérieures différentes.

4. Sortie centrale démontable selon une des revendications 1 à 3,
**caractérisée en ce que**,
sur la pièce d'accouplement (5), une tubulure de raccordement de fluide (1) est disposée en ligne entre deux raccords (9, 10), et le logement (8) présente deux brides (11, 12) orientées avec leur ouverture de logement dans des directions réciproquement opposées de telle sorte que la pièce d'accouplement (5) raccordée au dispositif de distribution (4) est logée de façon fixe par une rotation d'au moins environ 90° autour de la tubulure de raccordement de fluide (1) dans les brides (11, 12) qui s'adaptent aux dimensions extérieures des raccords (9, 10).

5. Sortie centrale démontable selon la revendication 4,
**caractérisée en ce que**
les raccords (9, 10) présentent différentes distances à la tubulure de raccordement de fluide (1) disposée entre eux.

6. Sortie centrale démontable selon une des revendications 1 à 5,
**caractérisée en ce que**
le logement (8) présente une bride (11, 12) adaptée pour chacun des raccords (9, 10) existants.

7. Sortie centrale démontable selon une des revendications citées précédemment,
**caractérisée en ce que**
le dispositif de distribution (4) présente un interrupteur de fluide (13) dont les conduites de distribution (14, 15) sont respectivement équipées d'une buse de distribution (16, 17).

8. Sortie centrale démontable selon la revendication 7,
**caractérisée en ce que**
l'interrupteur de fluide (13) est réalisé en matériau flexible.

9. Sortie centrale démontable selon la revendication 7 ou 8,
**caractérisée en ce que**
l'interrupteur de fluide (13) présente, sur au moins une de ses conduites de distribution (14, 15), un arceau de préhension (18, 19).

10. Sortie centrale démontable selon une des revendications 1 à 9,
**caractérisée en ce que**
l'élément de retenue (7) présente sur son côté inférieur un élément de répartition (20).

11. Sortie centrale démontable selon une des revendications 1 à 10,
**caractérisée en ce que**
l'élément de retenue (7) présente au moins une fenêtre de contrôle (21, 22).

12. Sortie centrale démontable selon une des revendications 1 à 11,
**caractérisée en ce que**
l'élément de retenue (7) présente au moins une zone de préhension (23, 24).

13. Préparateur de boissons avec une sortie centrale démontable selon une des revendications citées précédemment,
**caractérisé en ce que**
la sortie centrale est un composant du préparateur de boissons (35) et présente une tubulure de raccordement de fluide (1) transportant de l'eau ou respectivement de la vapeur d'eau, une tubulure de raccordement de fluide (2) transportant du café ou du cacao, et une tubulure de raccordement de fluide (3) transportant du lait.
